# EUROPEAN PATENT SPECIFICATION

(11) **EP 1 873 440 B1**
(45) Date of publication and mention of the grant of the patent: **14.01.2009**
(21) Application number: 06425443.6
(22) Date of filing: 28.06.2006
(51) Int. Cl.: F16L 57/06, B65G 53/52

(54) **Curved element of modular metal pipes for transporting concrete or of other highly abrasive materials in a fluid state, and manufacturing method for manufacturing said element**
Bogenelement eines Metallrohrmoduls zum Transportieren von Beton oder von anderen stark verschleissenden Materialien im flüssigen Zustand, und Verfahren zur Herstellung eines solchen Elementes
Elément incurvé d'un tuyau modulaire en acier pour transport du béton ou des l'autres matériaux fortement abrasives à l'état du liquide, et procédé de fabrication d'un tel élément

(43) Date of publication of application: 02.01.2008
(73) Proprietor: COMPAGNIA ITALIANA FORME ACCIAIO S.p.A., 20030 Senago (Milano) (IT)
(72) Inventor: Ferre, Fabio, 23017 Morbegno, Sondrio (IT)
(74) Representative: Faggioni, Marco

(56) References cited:
- DE-A1- 4 207 029
- DE-C1- 3 718 537
- US-B1- 6 467 812
- US-B2- 6 494 234

## Description

The present invention refers to a curved element of modular metal pipes intended for the transport of highly abrasive materials in a fluid state, in particular concrete. The invention also concerns a method for manufacturing such an element.

In the building industry, modular metal pipes are widely employed for transporting concrete in a fluid state from the delivering pump to the casting site. The pipe is assembled each time according to the geometrical features of the building site and of the individual casting site, and comprises rectilinear elements as well as curved elements. In order to meet the various requirements of changing pipe direction, the curved elements are arranged, in addition to the most common 90° angle, also with different angles, usually submultiples of 90°, for example 15°, 30°, 45°, 60°.

As is well-known to industry operators, the above-said pipes undergo strong wear due to the abrasive effect of quickly-flowing concrete on the inner walls of the pipe. This wear phenomenon is particularly apparent precisely on the curved elements of the pipe, where the outer part of the pipe undergoes very strong abrasion due to the centrifuge action exerted by the flowing fluid. Furthermore, it is important to point out that - in order to have both mechanical features suited to the use and good weldability (the latter being necessary to allow fixing by welding the end collars) - the steel of the pipe elements necessarily has rather modest wear-resistance.

Conventional, single-layer pipes - i.e. those in which steel pipe composition is the same inside and out - hence have, for the above listed reasons, too short a useful life and consequently impact considerably on the overall running costs of a concrete manufacturing plant, and this not only due to the intrinsic cost of the pipe elements to be replaced, but also to the service interruptions required by such frequent replacement actions.

Attempts to overcome this problem were initially made by manufacturing curved elements, again of the single-layer type, wherein the thickness of the pipe wall, however, was greater on the outer side of the curve rather than on the inner side. An improved solution of this type is disclosed in US-5 984 374, featuring not only a thickness increase from the inner to the outer side of the curve, but also a thickness increase in a longitudinal sense, i.e. in the prevailing flow direction in the pipe, so as to have the maximum thickness in correspondence of the material discharge area from the curved element. This type of solution has led to an improved useful life of said curved elements, making it virtually similar to that of the corresponding rectilinear elements, thereby allowing improved planning of the periodic replacement of the entire pipe. The high cost, increased weight and manufacturing difficulties of thus-made curved elements, however, have contributed to strongly limit the popularity of this solution on the market.

The problem was then faced in a completely different way, suggesting to employ double-layer, i.e. double-wall pipes. In such pipes, the outer pipe wall is manufactured of the minimum thickness sufficient to provide the required performance from a mechanical point of view, while the inner pipe, which at this point must no longer perform any substantial mechanical action, is manufactured of wear-resistant materials, such as high-tensile, cast steels or ceramic materials. This solution allows a substantial reduction of the thicknesses of the materials employed for forming the individual layers of the double-layer pipe and therefore results in lower costs and lower overall pipe weight, in addition to guaranteeing quite a longer duration of the same than original single-layer pipes. The different solutions disclosed so far, in connection with this particular double-layer structure of the pipes for concrete transport, differ from one another basically in the ways in which the two pipe elements forming the double-layer pipe are mutually fastened in a longitudinal direction and in a transversal direction to the axis of the pipe. As a matter of fact, in this respect, although double-layer pipes have been suggested wherein the two pipe-elements thereof are mutually mounted without play and therefore do not pose any problems of mutual displacement during use, double-layer pipes have become more popular wherein, after mounting, there is still a more or less wide gap between the two coupled pipe elements. As a matter of fact, the mutual mounting of such elements is noticeably easier and faster, especially as far as the curved elements are concerned. With the structures provided with this type of gap it is hence essential to adopt ways to mutually fasten the two elements forming the pipe and such ways of course affect the degree of pipe design complication - as we shall see in the following, commenting the prior art - determining features and costs thereof.

DE 3718537 discloses features of the preamble of claim 1. It describes a curved pipe obtained through a series of wedge elements adjacent and fixed one another with adesive, said elements having an high hardness and abrasion resistance and being externally covered by a continous case fibre-reinforced resin.

US-5 275 440 describes a solution wherein an inner pipe element in wear-resistant, cast steel is introduced with play into an outer, weldable-steel pipe element. The diameters of the two pipe elements are such as to form a cylindrical chamber between them intended to be filled by a layer of the same transported fluid, so that the pressure applied by the operating fluid on the inner wall of the pipe should theoretically discharge evenly - i.e. without determining localised loads and consequent failures - onto the outer one. The inner element of the pipe is fastened in an axial direction thanks to the fact that it abuts with the radial wall of end collars, welded to the opposite ends of the outer element, or against an inner lining of such collars. In a transversal direction the pipe either has no fastening system, or it is fastened only in correspondence of the ends thereof (fig. 5) through a coupling groove on the above-said side wall of the end collar.

The solution suggested in this document has a first main drawback due to the fact that the inner pipe elements must be manufactured in predetermined measures for each individual angle with which the curved elements are manufactured; it is hence necessary to arrange a set of moulds at different angles for each pipe diameter and this determines rather high manufacturing costs. A second, not less serious drawback is due to the fact that introduction of the operating fluid into the cylindrical chamber is very hard, since the chamber communicates with the inner part of the pipe only in correspondence of the thin gap formed in the end area, abutting with the collar or with the lining thereof, and said gap further tends to quickly become obstructed, especially when the end of the inner pipe element has a circular centring rib (fig. 5). In practice it is hence really difficult for the cylindrical chamber comprised between the two pipe elements to fill up completely and evenly, thereby determining a concentration of the stresses in the areas where filling has not occurred or is incomplete, with the possibility of localised failures of the inner pipe element and of a consequent quicker wear of the same.

US-6 467 812 on the contrary suggests that the inner lining pipe element be manufactured with very small tolerances, so that fastening between the two pipe elements forming the pipe may be achieved by employing a thermolabile adhesive, so as to ease removal of the worn inner lining and replacement thereof. In the same document it is also suggested to manufacture the inner lining pipe element through a series of modular annular elements of the same size rather than with a single piece. In any case, the individual elements of the inner lining are fastened to the inner wall of the outer pipe element through an adhesive which is pressure-injected through suitable holes made in said outer pipe element. The solution suggested by this patent hence has the drawback of a high manufacturing cost of the pipe elements forming the pipe, due to the small tolerances between said elements which are necessary for an effective gluing by adhesives. Such a type of fastening further introduces an undesired complication in the manufacturing step, in addition to necessarily requiring drilling of the outer pipe wall. Finally, using this system is not advisable in hot climate areas, where in summer the temperatures of the pipes exposed to sunshine may be very high and hence cause softening of the adhesive and consequently a possible displacement of the elements forming the inner lining.

A further solution, disclosed in US-6 494 234, recovers the type of design disclosed in US-5 275 440 - i.e. the coupling of two pipe elements with such a wide play as to form between them a gap or cylindrical chamber - changing, however, the fastening and centring system of the inner pipe element over the above-cited patent. As a matter of fact, in this case such element is fastened in position thanks to a series of centring pins which are introduced in corresponding holes formed on the outer pipe element and caused to abut with the inner pipe element, which element is kept in a centred position by two chucks housed at the opposite ends of the curved element. Once they are placed in position, the pins are definitively firmly locked on the outer wall of the pipe. In an alternative solution, in the holes drilled on the outer layer there is introduced, instead of the centring pins, a quickly-hardening, pasty plastic material, which expands into the surrounding gap area stabilising the inner pipe element in the desired position. The outer holes must then be closed welding steel plugs or pins thereto.

Even the solution disclosed in this patent is not at all satisfactory. As a matter of fact, in addition to the reasons already discussed in connection with US-5 275 440, it must be pointed out that the support of the inner pipe element is obtained through discrete points, and it is hence necessary for such element to have mechanical features and thickness suitable to determine a correct distribution of the concentrated stresses which arise in the support points. Moreover, manufacturing thereof is rather complex, since it provides the use of machines for drilling the outer layer and for welding the pins, as well as the use of outer chucks which must be positioned and kept there for the entire pin welding operation or for the hardening of the pasty plastic material.

Finally, also US-6 520 213 discloses a curved, double-wall pipe structure which is substantially similar to the one described for US-5 275 440. The improvement introduced in the structure of the end collars - provided with a rib protruding towards the inner side of the curve and capable of forming a centring seat both of the inner pipe element and of the outer one - however, does not change the overall performance of the product, wherein all the same drawbacks analysed above for US-5 275 440 are hence found.

It is hence an object of the present invention to provide a curved element of modular metal pipes which overcomes the drawbacks described above of the curved elements of the prior art and, in particular, despite having a good performance in terms of duration and mechanical strength, can be manufactured through a simple and inexpensive manufacturing process. Preferably, manufacturing of the curved element in different angular versions will furthermore not require a high number of special components.

Such object is achieved, according to the present invention, through a curved element of modular, double-wall, metal pipes, having the features defined in the accompanying main claim. Further features are defined in the dependent claims.

The curved element of double-wall metal pipes according to the present invention will in any case be better described in detail, with reference to a preferred embodiment of the same, shown in the accompanying drawings, wherein:
fig. 1 is a longitudinal cross-section view of a curved pipe element for concrete according to the present invention, with a 90° angle;
fig. 2 is a cross-section view along line II-II of fig. 1; and
fig. 3 is a cross-section view along line III-III of fig. 1.

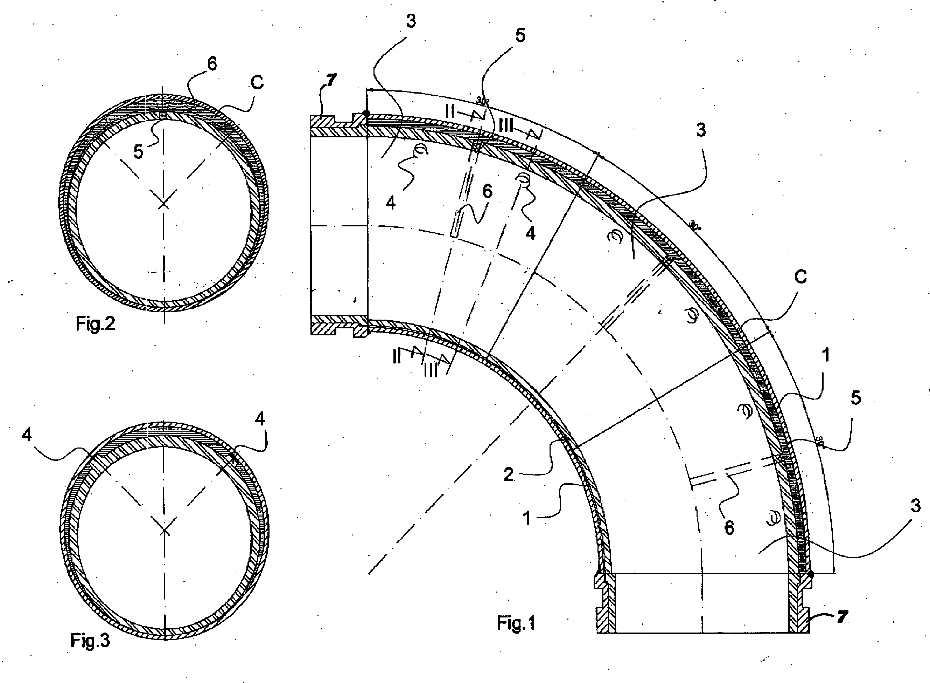

As can be seen in fig. 1, the curved element of metal pipes for concrete according to the present invention comprises, in a manner known per se, a continuous, outer pipe element 1, intended to supply mechanical strength and weldability to the pipe, as well as a wear-resistant inner pipe element 2.

According to the main feature of the invention, inner pipe element 2 consists of a plurality of annular wedge elements 3 which are introduced, with large diametrical play, into pipe 1 and arranged adjacent in a longitudinal sense to form inner pipe element 2.

By the definition of "annular wedge element" in the present description it is intended a portion of curved pipe element having a predetermined longitudinal development and such that its outer faces lie on planes passing through the curvature centre of said pipe element. For each of said annular wedge elements it is hence possible to define a curvature radius and an angular development which is precisely the angle formed by the above-said planes.

According to the invention, annular wedge elements 3 all have the same angular development, preferably a submultiple of 90°, such as for example 15°. Since all curved elements of the pipes for concrete normally have a single, well-defined curvature radius for each diameter class of the pipe, it is possible to form an inner pipe lining 2 for curved elements of any standard angular extension, for example 30°, 45°, 60° or 90°, using a single type of annular element 3 - of course for each diameter class of the pipe - and arranging inside outer pipe element 1 a sufficient number of elements 3 side by side to cover the entire longitudinal length. In the embodiment shown, each wedge element 3 has a 30° angular extension, so that in the curved element with a 90° angle, 3 side-by-side wedge elements 3 are found.

Each annular wedge element 3 has on the outside a certain number of radial spacers 4 which serve to keep annular element 3 centred in a predetermined transversal position inside outer pipe element 1, forming a gap chamber C. As shown in the drawings, a preferred arrangement of spacers 4 is in correspondence of the outer side of the curved element, so that chamber C has maximum thickness in correspondence of the estrados, said thickness virtually decreasing to zero in correspondence of the intrados, where elements 3 are substantially in contact with outer pipe element 1, as can be clearly seen in figs. 2 and 3.

Each element 3 further has a hole 5, in a central position of the estrados, said hole allowing the filling of chamber C by the concrete flowing pressurised in the curved element. In order to aid a more effective and complete concrete distribution in gap C, symmetrical grooves 6 are formed in correspondence of holes 5, which grooves extend on the outer surface of elements 3, with a decreasing depth along a semicircumference of the element.

The manufacturing cost of annular wedge elements 3 is of course extremely low. As known, the elements intended to form the inner, wear-proof lining are formed by mould injection of a suitable high-hardness steel alloy. The fact that annular elements 3 are rather small-sized and, especially, that they have a modest angular development, enormously aids the casting process and allows a dramatic cost reduction over the manufacture of longer pipe elements which have a wider curvature angle. The need to have a specific mould for each curved element having a set angle of curvature is further fully removed, but the entire production of curved elements may be met, as was mentioned above, by manufacturing a single, standard-sized annular element for each pipe diameter class.

Through the specific design of annular elements 3, the manufacturing of the pipe according to the present invention is also much aided, quick and inexpensive. As a matter of fact, curved elements of a pipe for concrete may be manufactured simply by introducing into an outer pipe element 1, of the desired diameter and curvature angle, a sufficient number of corresponding annular wedge elements 3, so that said elements are mutually adjacent and adjacent to end collars 7 - which are provided with an inner abutting lining and welded to pipe element 1 in a manner well-known per se - so as to ensure the longitudinal stability of elements 3. The pipe is hence connected to the concrete feeding source and the concrete is pumped into the same at a reduced pressure.

Thanks to the presence of holes 5 provided in each annular element 3, during the first use of the pipe the concrete enters, quickly and fully, gap chamber C causing, once hardening has occurred, the perfectly stable and long-lasting fixing of annular elements 3 inside outer pipe element 1. Grooves 6 allow to achieve progressive and complete filling of chamber C, without leaving therein any empty area - in particular in the outer area of the curve which, as seen above, is the most heavily stressed one from a mechanical point of view - thereby guaranteeing an even stress distribution on the outer element of the pipe.

From the preceding description it appears clearly how the present invention has fully achieved the set object, allowing the manufacture of a curved element for metal pipes having high performance and low cost, thanks to the use of a single, standard-sized element for the forming of the inner lining and to the provision of distributed inlet ports of the concrete, connecting the inner part of the pipe with gap C.

As a matter of fact, this particular design allows - unlike what occurs in the prior art, where the filling material between the two pipe layers must be arranged inside the pipes directly by the manufacturer during manufacture - to obtain this result automatically, during the first step of machine start, when it is precisely the concrete pumped through the pipes which enters the gap between the two layers and, solidifying, makes them perfectly integral with each other. In practice then, the last step of the conventional manufacturing process is transferred to the first starting step of the machine on which the pipes are mounted, with obvious greater efficiency in terms of times and manufacturing costs.

The invention has been described with reference to a preferred embodiment of the same, but it is clear that the scope of the invention extends to any possible variant thereof, within the obvious reach of a person skilled in the field, such scope being only defined by the accompanying claims.

## Claims

1. Curved element of double-wall, modular metals pipers for transporting concrete or other highly-abrasive fluid materials, of the type comprising an outer pipe element (1) having high mechanical strength and an inner pipe element (2) with high wear-resistance, which consists of a series of annular wedge elements (3), arranged side by side to form a substantially continuous lining of the outer pipe element (1), the outer diameter of said annular wedge elements (3) being such as to couple with play with said outer pipe element (1), **characterised in that** each of said annular wedge elements (3) comprises outer radial spacing means (4), for the positioning with respect to the outer pipe element (1), capable of forming a gap chamber (C) between said outer pipe element (1) and said annular wedge elements (3) arranged side by side, and communication ports (5) between said gap chamber (C) and the inner part of the pipe.

2. Curved element of metal pipes as in claim 1, wherein said communication ports (5) consist of at least one hole on the wall of said annular wedge elements (3), formed in correspondence of the extrados of such elements.

3. Curved element of metal pipes as in claim 2, wherein said holes (5) open on symmetrical grooves (6), which extend on the outer surface of said elements (3) at a decreasing depth along a semicircumference of said elements.

4. Curved element of metal pipes as in claim 1, wherein said outer radial spacing means (4) are formed in correspondence of the outer side of said annular wedge elements (3), so that said gap chamber (C) has its maximum thickness in correspondence of the extrados and its minimum thickness in correspondence of the intrados of the curved element.

5. Curved element as in claim 4, wherein said annular wedge elements (3) are in contact with said outer pipe element (1) in correspondence of the intrados of the curved element.

6. Curved element of metal pipes as in any one of claims 1 to 5, wherein said annular wedge elements (3) are fastened in position with respect to the outer pipe element (1) by a cement filling said gap chamber (C) through said ports.

7. Curved element of metal pipes as in claim 6, wherein said cement consists of the same fluid flowing in the pipe and, in particular, of concrete.

8. Curved element of metal pipes as in any one of claims 1 to 7, wherein all said annular wedge elements (3) have the same angular development.

9. Curved element of metal pipes as in claim 8, wherein said angular development is a submultiple of 90°, preferably equal to 15° or 30°.

10. Manufacturing process of a curved element of modular metal pipes as in any one of the preceding claims, comprising the steps of:
a. arranging a curved outer pipe element (1) having the desired diameter and curvature angle;
b. introducing in said element a series of said adjacent annular wedge elements (3) of a corresponding diameter, until they form a substantially continuous lining (2) of the inner wall of said outer pipe element (1);
c. welding end collars (7) provided with an inner abutting lining to said outer pipe element (1);
d. introducing the curved element thus formed into a pipe for concrete transport;
e. causing the concrete to flow in the pipe, thereby determining the filling of the gap chamber (C) formed between the outer pipe element (1) and the annular wedge elements (3), through the ports (5, 6) formed in said annular wedge elements (3).

## Patentansprüche

1. Bogenelement von doppelwandigen, modularen Metallrohren zum Fördern von Beton bzw. anderen stark scheuernden flüssigen Stoffen, umfassend ein äußeres Rohrelement (1) mit hoher mechanischer Festigkeit und ein inneres Rohrelement (2) mit hoher Verschleißfestigkeit, das aus einer Reihe von ringförmigen Keilelementen (3) besteht, die zur Bildung eines im Wesentlichen durchgehenden Futters für das äußere Rohrelement (1) nebeneinander angeordnet sind, wobei der Außendurchinesser der besagten ringförmigen Keilelemente (3) so bemessen ist, dass er mit Spiel mit dem besagten äußeren Rohrelement (1) verbunden wird, **dadurch gekennzeichnet, dass** die ringförmigen Keilelemente (3) jeweils äußere radiale Distanzmittel (4) zur Positionierung im Verhältnis zum äußeren Rohrelement (1) aufweisen, die in der Lage sind, einen Spalt (C) zwischen dem äußeren Rohrelement (1) und den nebeneinander angeordneten ringförmigen Keilelementen (3) sowie Verbindungsöffnungen (5) zwischen dem Spalt (C) und dem inneren Teil des Rohrs zu bilden.

2. Bogenelement von Metallrohren nach Anspruch 1, wobei die Verbindungsöffnungen (5) aus wenigstens einem Loch in der Wand der ringförmigen Keilelemente (3) bestehen, das in Übereinstimmung mit dem Bogenrücken von derartigen Elementen gebildet ist.

3. Bogenelement von Metallrohren nach Anspruch 2, wobei die Löcher (5) zu symmetrischen Nuten (6) hin führen, die sich auf der Außenfläche der Elemente (3) mit abnehmender Tiefe an einem halben Umfang der Elemente entlang erstrecken.

4. Bogenelement von Metallrohren nach Anspruch 1, wobei die äußeren radialen Distanzmittel (4) in Übereinstimmung mit der Außenseite der ringförmigen Keilelemente (3) gebildet sind, so dass die maximale Dicke des Spalts (C) dem Bogenrücken und seine minimale Dicke der Bogenleibung des Bogenelements zugeordnet ist.

5. Bogenelement von Metallrohren nach Anspruch 4, wobei die ringförmigen Keilelemente (3) in Übereinstimmung mit der Bogenleibung des Bogenelements mit dem äußeren Rohrelement (1) in Kontakt sind.

6. Bogenelement von Metallrohren nach einem der Ansprüche 1 bis 5, wobei die ringförmigen Keilelemente (3) im Verhältnis zum äußeren Rohrelement (1) von einem Zement in Position gehalten werden, der durch die öffnungen in den Spalt (C) eingefüllt wird.

7. Bogenelement von Metallrohren nach Anspruch 6, wobei der Zement aus der durch das Rohr fließenden Flüssigkeit und insbesondere aus Beton besteht.

8. Bogenelement von Metallrohren nach einem der Ansprüche 1 bis 7, wobei alle ringförmigen Keilelemente (3) dieselbe Winkelerstreckung aufweise.

9. Bogenelement von Metallrohren nach Anspruch 8, wobei die Winkelerstreckung ein ganzzahliger Teiler von 90°, vorzugsweise 15° oder 30°, ist.

10. Herstellungsverfahren für ein Bogenelement von doppelwandigen, modularen Metallrohren nach einem der vorhergehenden Ansprüche, umfassend die folgenden Schritte:
a. das Anordnen eines gebogenen äußeren Rohrelements (1) mit dem gewünschen Durchmesser und Bogenwinkel;
b. das Einfügen einer Reihe von nebeneinander angeordneten ringförmigen Keilelementen (3) in das Element, bis sie ein im Wesentlichen durchgehendes Futter (2) an der Innenwand des äußeren Rohrelements (1) bilden;
c. das Anschweißen von Muffen (7) mit anliegendem Innenfutter an das besagte äußere Rohrelement (1);
d. das Einfügen des auf diese Weise gebildeten Elements in ein Rohr zum Fördern von Beton;
e. das Veranlassen eines Betonflusses im Rohr zum Füllen des Spaltes (C) zwischen dem äußeren Rohrelement (1) und den ringförmigen Keilelementen (3) durch die in den ringförmigen Keilelementen (3) gebildeten Öffnungen (5, 6).

## Revendications

1. Elément courbe constitué de tuyaux métalliques modulaires à doubles parois pour le transport de béton ou d'autres matériaux fluides fortement abrasifs, du type comprenant un élément de tuyau extérieur (1) présentant une résistance mécanique élevée et un élément de tuyau intérieur (2) présentant une résistance à l'usure élevée, qui est constitué d'une série d'éléments de coins annulaires (3) agencés côte à côte pour former un chemisage sensiblement continu de l'élément de tuyau extérieur (1), le diamètre extérieur desdits éléments de coins annulaires étant tel qu'ils s'accouplent avec du jeu avec ledit élément de tuyau extérieur (1), **caractérisé en ce que** chacun desdits éléments de coins annulaires (3) comprend un moyen d'écartement radial extérieur (4), pour un positionnement par rapport à l'élément de tuyau extérieur (1) pouvant former une chambre d'espacement (C) entre ledit élément de tuyau extérieur (1) et lesdits éléments de coins annulaires (3) agencés côte à côte, et des orifices de communication (5) entre ladite chambre d'espacement (C) et la partie intérieure du tuyau.

2. Elément courbe constitué de tuyaux métalliques selon la revendication 1, dans lequel lesdits orifices de communication (5) sont constitués d'au moins un trou sur la paroi desdits éléments de coins annulaires (3), formé en correspondance des extrados de tels éléments.

3. Elément courbe constitué de tuyaux métalliques selon la revendication 2, dans lequel lesdits trous (5) s'ouvrent sur des gorges symétriques (6), qui s'étendent sur la surface extérieure desdits éléments (3) à une profondeur décroissante le long d'une demi-circonférence desdits éléments.

4. Elément courbe constitué de tuyaux métalliques selon la revendication 1," dans lequel ledit moyen d'écartement radial extérieur (4) est formé de façon correspondante au côté extérieur desdits éléments de coins annulaires (3), de sorte que ladite chambre d'espacement (C) présente son épaisseur maximum en correspondance des extrados et son épaisseur minimum en correspondance des intrados de l'élément courbe.

5. Elément courbe selon la revendication 4, dans lequel lesdits éléments de coins annulaires (3) sont en contact avec ledit élément de tuyau extérieur (1) en correspondance des intrados de l'élément courbe.

6. Elément courbe constitué de tuyaux métalliques selon l'une quelconque des revendications 1 à 5, dans lequel lesdits éléments de coins annulaires (3) sont fixés en position par rapport à l'élément de tuyau extérieur (1) par un ciment remplissant ladite chambre d'espacement (C) à travers lesdits orifices.

7. Elément courbe constitué de tuyaux métalliques selon la revendication 6, dans lequel ledit ciment est constitué du même fluide s'écoulant dans le tuyau et en particulier de béton.

8. Elément courbe constitué de tuyaux métalliques selon l'une quelconque des revendications 1 à 7, dans lequel tous lesdits éléments de coins annulaires (3) présentent le même développement angulaire.

9. Elément courbe constitué de tuyaux métalliques selon la revendication 8, dans lequel ledit développement angulaire est un sous-multiple de 90°, de préférence égal à 15° ou 30°.

10. Procédé de fabrication d'un élément courbe constitué de tuyaux métalliques modulaires selon l'une quelconque des revendications précédentes, comprenant les étapes consistant à :
a. agencer un élément de tuyau extérieur courbe (1) présentant le diamètre et l'angle de courbure souhaités,
b. introduire dans ledit élément une série desdits éléments de coins annulaires adjacents (3) d'un diamètre correspondant, jusqu'à ce qu'ils forment un chemisage sensiblement continu (2) de la paroi intérieure dudit élément de tuyau extérieur (1),
c. souder des colliers d'extrémité (7) dotés d'un chemisage de butée intérieure audit élément de tuyau extérieur (1),
d. introduire l'élément courbe ainsi formé à l'intérieur d'un tuyau pour le transport de béton,
e. amener le béton à s'écouler dans le tuyau, en déterminant de cette manière le remplissage de la chambre d'espacement (C) formée entre l'élément de tuyau extérieur (1) et les éléments de coins annulaires (3), à travers les orifices (5, 6) formés dans lesdits éléments de coins annulaires (3).
